# EUROPEAN PATENT APPLICATION

(11) **EP 3 771 824 A1**
(43) Date of publication of application: **03.02.2021**
(21) Application number: 19189093.8
(22) Date of filing: 30.07.2019
(51) Int. Cl.: F03D 80/50, F03D 80/00

(54) **DEVICE AND METHOD FOR ON-SITE RECYCLING OF A WIND POWER PLANT**

(71) Applicant: Metso Germany GmbH, 40235 Düsseldorf (DE)
(72) Inventor: Peter, Thomas, 41812 Erkelenz (DE)
(74) Representative: Hoffmann Eitle

(57) **Abstract**

The present application relates to a device (10) for at least partially shredding a horizontal-axis wind turbine (12), the wind turbine (12) comprising a vertically oriented tower (14) and a horizontal-axis hub (16) carrying a plurality of rotor blades (18), the hub (16) being mounted in an upper portion of the tower (14). According to the invention, the device (10) comprises moving means (20) to vertically move the device (10) along the tower (14), and a crushing chamber (22) for shredding one of the rotor blades (18), wherein the crushing chamber (22) has a top opening to let the rotor blade (18) dive into the crushing chamber (22) as the device (10) is moved upwards along the tower (14).

## Description

### TECHNICAL FIELD

The present invention relates to a device for and method of at least partially shredding a horizontal-axis wind turbine. Such a wind turbine comprises a vertically oriented tower and a horizontal-axis hub or rotor shaft carrying a plurality of rotor blades, wherein the hub is mounted in an upper portion of the tower, in particular on its top. The tower is tubular and can be frustoconical, i.e. its diameter can decrease from its bottom towards its top.

### BACKGROUND

In recent years, the number of wind turbines has rapidly increased and the demand for efficient wind turbines is still increasing to obtain electric power for the electrical grid. The most common type of wind turbine, in particular in the countryside or off-shore, is the horizontal-axis wind turbine (HAWT) which usually comprises a vertically oriented tower and a horizontal-axis hub or rotor shaft. The wind turbine usually comprises peripheral devices like, for example, a gearbox, a brake assembly and/or electrical generator, and the hub carries a number of usually three, but sometimes fewer or more, rotor blades. The hub is usually mounted on the top of the tower.

As a consequence of the increase in number of wind turbines, as well as the need to use state-of-the-art turbines whenever possible in order to most effectively use the wind energy for generation of electrical power, there is a need to be able to dispose of old, broken or for other reasons no longer desired wind turbines, and in particular to be able to recycle the materials used for the wind turbine.

Wind turbines for electric power generation are often very large and difficult to handle. The components of a common wind turbine for electric power generation are usually very long, even the rotor blades can have a length of more than 100m each. This results in particular difficulties in particular with respect to transporting the components to a recycling site.

In view of the above, there is a need to find a way to efficiently dispose of a wind turbine and prepare it for a recycling process.

### SUMMARY OF THE INVENTION

Following the above, the present invention aims at solving the problem of efficiently disposing of a wind turbine to recycle its components.

This problem is solved by a device for at least partially shredding a horizontal-axis wind turbine according to claim 1 and a method of at least partially shredding a horizontal-axis wind turbine according to claim 9. Preferred features and embodiments of the invention are subject to the dependent claims.

The device for at least partially shredding a horizontal-axis wind turbine, wherein the wind turbine comprises a vertically oriented tower and a horizontal-axis hub or rotor shaft carrying a plurality of rotor blades, and wherein the hub is mounted in an upper portion of the tower, comprises moving means to vertically move the device along the tower, and a crushing chamber for shredding one of the rotor blades. The crushing chamber has a top opening to let the rotor blade dive into the crushing chamber as the device is moved upwards along the tower.

This device allows for shredding, in a HAWT as described above, the rotor blades of a wind turbine as they are still mounted to the hub or rotor shaft. The infrastructure on which the hub is mounted is used for supporting also the device as it shreds the rotor blade so that no extra crane or similar infrastructure is necessary to carry the device.

The crushing chamber of the device can house any sort of known crushers. In particular, the crusher can comprise rotating crushing tools which are particularly suitable for crushing components of a long and slim shape like the rotor blades of a wind turbine. But generally, the kind of crusher within the crushing chamber can be freely chosen. The relevant feature of the crushing chamber is that the rotor blade can dive into the crushing chamber from its top and be shred from its end towards the hub. Hence, the rotor blade can be progressively shred from its end portion towards the hub, thereby progressively reducing its length and the related difficulties in handling the rotor blade. Accordingly, in addition to shredding the whole rotor blade, it is also possible to only partially shred the rotor blade or rotor blades in order to reduce the size of the remaining components for them to be transported to a recycling site or other places.

Accordingly, the above-described device allows for on-site shredding the rotor blades of the wind turbine, thereby significantly reducing the difficulties in disposing of the wind turbine. In this regard, the term "shredding" is not limited to the use of shredders as opposed to other devices for reducing the size of material. Rather, also crushers, mills, compactors and similar devices for reducing the size of components such as waste material are conceived.

In a preferred embodiment, the crushing chamber contains rotating crushing tools for crushing the rotor blade upon an upward movement of the device. The rotating crushing tools are particularly preferably because they can be arranged such that the rotor blade easily dives between the rotating crushing tools and can effectively and efficiently be shred.

However, also other crushing assemblies like jaw crushers and other devices for reducing the size of components like shredders are possible to be used in the crushing chamber.

Preferably, the moving means comprises one wheel, in particular a toothed wheel, more preferably at least two wheels located substantially opposite to each other, for driving the device to vertically move along the tower, wherein each wheel is preferably arranged on a rocker arm to adapt to different diameters of the tower.

The moving means can comprise a wheel which can have a friction-enhanced surface such as a rubber tire or a toothed wheel to more efficiently transfer the movement of the wheel into a movement of the device along the tower. In case of a toothed wheel, the tower is provided with a toothed rack or similar element with which the toothed wheel or wheels can cooperate. The toothed rack can be installed on or next to the tower in preparation of the use of the device, but can also be integrated with the tower. Also, it is possible to modify the surface of the tower to prepare for the device to vertically move along the tower. Whilst the one or more toothed rack is not an integral part of the above-described device, it can be part of an assembly of the device and the one or more toothed rack.

If only one wheel is used as the moving means, it is preferred that additional support wheels or guides are provided in order to ensure friction of the wheel. It is preferred that two wheels are provided on opposite sides with respect to the tower, which means that the tower is between the two wheels, so that a balance of the drive force of the wheels of the moving means can be obtained. Hence, the two wheels can contribute to maintaining a stable orientation of the device to be easily, reliably and accurately movable along the tower. Of course, it is also possible to use more than two opposing wheels. For example three wheels which are arranged at, in the circumferential direction, an angular spacing of approximately 120 degrees, can similarly provide a stable orientation of the device while being easily, reliably and accurately movable along the tower.

For letting the device move vertically along the tower, the tower can, for example, be equipped with two or more segmented rack bars arranged in a corresponding offset in the circumferential direction of the tower such as 180° in case of two, 120° in case of three, or 90° in case of four rack bars, respectively.

The device preferably comprises correspondingly arranged toothed wheels which, by means of rotary motors, can be rotated to vertically move the device upwards along the tower.

For a downward movement, alternatively or in addition to a rotary motor, gravity can be used as source of the driving force, and a brake unit, such as a disk brake, can be used to hold the device.

That each of the wheels is preferably arranged on a rocker arm to adapt to different diameters of the tower is a further optional feature of the device which is particularly preferable, if the device is to be used for shredding the rotor blades of a wind turbine which has a frustoconical tower. In this case, the diameter of the tower continuously decreases from its bottom to its top. If a toothed rack is used to have toothed wheels cooperate with the toothed rack, and the toothed rack can, but does not necessarily have to, be arranged to taper towards the top of the tower.

Further preferably, the device further comprises four guide wheels for guiding the device when vertically moving along the tower, wherein the guide wheels are preferably arranged on rocker arms to adapt to different diameters of the tower.

Guide wheels are helpful in stabilizing the device as it travels along the tower and during shredding operation of the device. In contrast to the wheel or wheels of the moving means, guide wheels are usually not driven by a motor, but serve to maintain a position and an orientation of the device. They are ideally arranged around the circumference of the tower, and the number of guide wheels correlates with their effectiveness in stabilizing the device as well as additional drag when moving the device along the tower.

For example, the device can be guided along the vertical direction of the tower by four guide wheels circumferentially arranged at a 90° offset. However, of course, more or fewer guide wheels and/or rails or similar means can be used for guiding the device along the vertical direction of the tower.

In order to compensate for a potentially existing tapering of the tower structure, if it is frustoconical, at least one of the wheel or wheels of the moving means and the guide wheel or wheels can preferably be arranged on a rocker arm. The rocker arm, by swivelling or pivoting, allows the respective wheel to be pressed, and thus be coupled to, the tower structure and/or toothed rack or similar device, for example by means of a hydraulic cylinder or an air cylinder. Thus, a position of the respective wheel, in particular a distance between a toothed rack and a toothed wheel or a contact between a guide wheel and a surface of the tower as well as a corresponding pressing force can be chosen and ensured. If each of the wheels is provided on a rocker arm, it is also possible to set and maintain a particular relative position of the device with respect to the tower.

Further preferably, the device comprises means, in particular at least one of a wheel, a groove, a channel, and a rail as a guide, for securing it against a rotation of the device with respect to the tower about the vertical axis. Whilst a general guide wheel as explained further above is primarily helpful for setting and maintaining a relative position of the device with respect to the tower in the vertical direction, and a rocker arm can contribute to setting and maintaining a radial position of the device with respect to the tower, a particular wheel, groove, channel and/or rail can help setting and maintaining an angular position of the device with respect to the tower about the vertical axis. This prevents the device from turning about the vertical axis and increases the stability and positional accuracy of the device about this axis.

A wheel can, for example, be configured to form a channel along its running surface which could then cooperate with a rail, a rack or one or more protrusions on the tower or fixed with respect to the tower. Similarly a groove or channel of the device can be used. Of course the interaction between these elements can also be inverted in the sense that there can be a wheel, groove or channel on the tower or fixed with respect to the tower which cooperates with a protrusion or rail on the device.

A preferred configuration uses a groove or U-rail provided on the device and configured to cooperate with a toothed rack provided along the tower. The toothed rack primarily serves to form a counter element for the toothed gear. It can, however, also be configured to protrude in a radial direction from the surface of the tower so that its protruding portion can be enclosed by the legs of a groove or U-rail or of a correspondingly shaped wheel.

Alternatively, the device can also be movable about the vertical axis, and its position in the circumferential direction can be determined e.g. by the rotor blade to be shred.

In a preferred embodiment, the device further comprises a cutting unit at its top for stepwise cutting the tower into a plurality of segments from its top down to its bottom. In a particularly preferred embodiment, the cutting unit is a flame cutting unit or a laser cutting unit. The cutting down of the tower can be carried out to dispense or recycle the tower material after the rotor and generator have been removed from the tower. Whilst for shredding the rotor blades, the device is moved upwards, it is moved downwards for shredding, or cutting, the tower.

Further preferably, the cutting unit comprises a plurality of cutting heads which are synchronously rotatable around the vertical axis. This allows the cutting unit to particularly efficiently cut down the tower.

According to a preferred embodiment, the device further comprises a pusher unit for pushing the segments into the inside of the tower. The inside of the tower is a place where the segments into which the respective part of the tower has been cut can be pushed in order to avoid that segments hit, damage or even destroy objects or harm people in the vicinity of the wind turbine. Further, since the tower of known wind turbines is usually conically formed, which means that its diameter decreases from the ground to the top of the wind turbine, and since the tower usually is hollow, the inside of the tower can suitably be used for containing the segments to a large extent. When the inside of the tower is full or it is not possible to push the segments into the inside of the tower, the segments can also be pushed to a different location, i.e. outside of the tower, or can be removed by carrying them via a crane or a similar tool.

The method of at least partially shredding a horizontal-axis wind turbine, the wind turbine comprising a vertically oriented tower and a horizontal-axis hub carrying a plurality of rotor blades, the hub being mounted in an upper portion of the tower, comprises arranging the hub such that one of the rotor blades extends vertically downwards, locating a shredding device along the tower so that an end portion the rotor blade dives into a crushing chamber through a top opening of the crushing chamber, moving the shredding device upwards along the tower whilst crushing the portion of the rotor blade which dives into the crushing chamber, optionally, after having crushed the desired portion of the rotor blade, moving the shredding device downwards along the tower, then arranging the hub such that a further one of the rotor blades extends vertically downwards, and locating the shredding device along the tower so that an end portion of the further one of the rotor blades dives into the crushing chamber through the top opening.

Preferably, the method comprises stepwise cutting the tower into a plurality of segments from its top down to its bottom after shredding the rotor blades.

Further preferably a device as described above is used for the method.

According to the method and in particular its preferred embodiments, a wind turbine can very efficiently be at least partially shred so that high costs of transporting elements of the wind turbine to a recycling site, or of otherwise cutting the wind turbine down into small pieces, can be avoided.

Further advantages of the invention can be derived from the whole set of claims as well as the following description of the figures and preferred embodiments.

### BRIEF DESCRIPTION OF THE FIGURES

- Fig. 1: illustrates a horizontal-axis wind turbine and a preferred embodiment of a device for at least partially shredding it located on its tower when shredding one of the rotor blades.
- Fig. 2: illustrates a tower of the wind turbine of Fig. 1 and the device of Fig. 1 when cutting the tower.

### DETAILED DESCRIPTION OF PREFERRED EMBODIMENTS

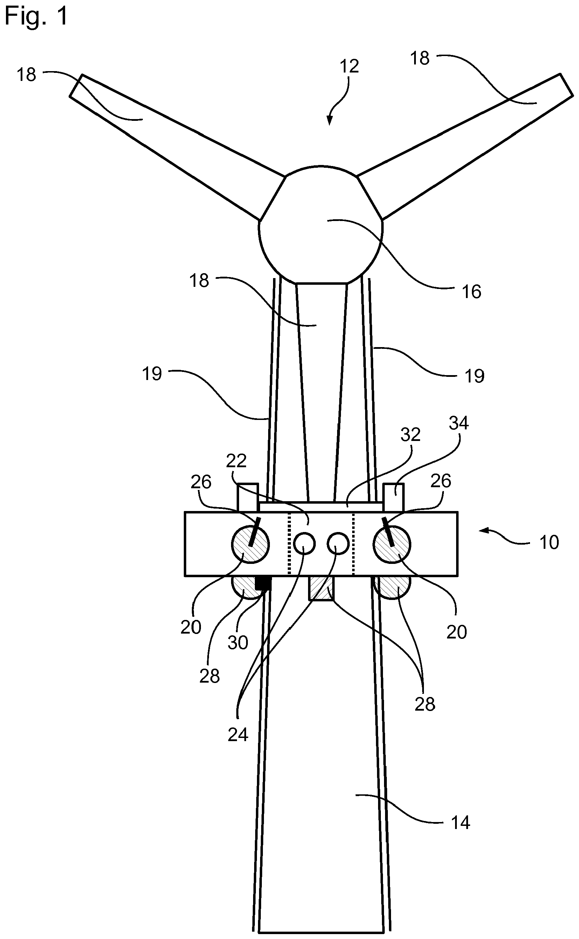

Fig. 1 schematically illustrates a preferred embodiment of a horizontal-axis wind turbine (HAWT) 12 and a preferred embodiment of a shredding device 10 for at least partially shredding the HAWT. The HAWT 12 comprises a tower 14 which is slightly conically shaped from a wider bottom towards a narrower top. On the top of the tower 14, a hub 16 is mounted which holds three rotor blades 18 in a conventional manner. Via the hub 16, the power of the wind is transferred from the rotor blades 18 to a generator (not illustrated) in a conventional manner.

Along the tower 14, two toothed racks 19 are mounted substantially vertically, i.e. following the slightly tapered contour of the tower 14. Instead of, as an alternative of, or in addition to the toothed racks 19, the tower 14 can be shaped to have a plurality of recesses and/or projections to allow a toothed wheel to engage with the recesses and/or projections. Similarly, the tower 14 can be provided with a highly frictional surface by means of a structured surface or a suitable paint to allow or support a friction wheel such as a rubber tire to apply a sufficiently high frictional force for it to move along the tower 14.

A shredding device 10 is provided which encloses the tower 14 circumferentially. Although not essential, it is preferred that the shredding device 10 encloses the tower 14. It could otherwise only partially extend around the tower 14, or be held on the tower 14 by any attachment means.

The shredding device 10 comprises toothed wheels 20, of which two are illustrated in Fig. 1. Each of the toothed wheels 20 is mounted on a rocker arm 26 which allows the toothed wheels 20 to be moved horizontally, i.e. substantially radially with respect to the conical tower 14 having a substantially circular base, so that their positions can be easily adapted to e.g. the diameter of the tower 14 at the position of the toothed wheels 20. In this way, the toothed wheels 20 can engage with the toothed racks 19 or a corresponding surface shape at a corresponding position in circumferential direction of the tower 14. This, in turn, allows the toothed wheels 20 to act as a moving means to vertically move the shredding device 10 along the tower 14.

Alternatively, if neither toothed racks 19 nor a corresponding shape of the surface of the tower 14 are provided, the toothed wheels 20 can be replaced or supplemented by frictional wheels such as rubber tires in order to allow the shredding device 10 to be moved vertically along the tower 14.

The shredding device 10 further comprises a crushing chamber 22 which houses one or a plurality of crushing rolls 24 or similar crushing tools. The crushing rolls 24 within the crushing chamber 22 are arranged to crush elements which enter into the crushing chamber 22 from its top. In the present embodiment, the crushing chamber 22 has an opening at its top which allows a rotor blade 18 to dive into the crushing chamber 22 as the shredding device 10 is moved upwards along the tower 14. The portion of the rotor blade 18 which extends into the crushing chamber 22 is shredded by the crushing rolls 24 as the shredding device 10 is moved upwards along the tower 14. This way, the shredding device 10 can continuously shred the rotor blade 18 from its end towards the hub 16 of the HAWT 12 without the rotor blade 18 being dismounted from the hub 16.

In order to securely and accurately guide the shredding device 10 along the tower 14, it further comprises one or more, in the present embodiment four, guide wheels 28 as well as a groove rail 30.

The guide wheels 28 are provided in addition to the toothed wheels 20 and ensure a precise positioning of the shredding device 10 on the tower 14 by applying horizontal, i.e. radial with respect to a circular base of the tower 14, forces. These forces can for example be applied via rocker arms (not illustrated in Fig. 1) on which the guide wheels 28 can be mounted. This way, the shredding device 10 is stabilized on the tower 14 and bouncing or wobbling, or imprecise orientations of the shredding device 10 with respect to the vertical axis of the tower 14 can be avoided.

The groove rail 30 is a means to define and maintain a circumferential position of the shredding device 10 with respect to the tower 14. The groove rail 30 defines a groove within which a guide rail, a projection, one of the toothed racks 19 or anything similar can slide as the shredding device 10 moves vertically. It prevents the shredding device 10, and thus the crushing chamber 24, from rotating about the tower 14, thereby ensuring a precise positioning of the crushing chamber 24 with respect to the circumferential position of the rotor blade 18 to be shredded.

The shredding device 10 as illustrated in Fig. 1 allows to sequentially shred all three rotor blades 18 by moving below the position along the tower 14 where a downwardly extending rotor blade 18 ends, rotating the hub 16 so that one of the rotor blades 18 extends downwards substantially parallel to the tower 14. Then, the shredding device 10 is moved upwards so that the downwardly extending rotor blade 18 dives into the crushing chamber 22 from above and crushed or shredded within the crushing chamber 22 by means of the crushing rolls 24 or other crushing tool. This shredding or crushing of the rotor blade 18 is continuously carried out as the shredding device 10 moves upwards as close to the hub 16 as necessary.

This way, the rotor blades 18 do not have to be dismounted from the hub 16 and the hub 16 and generator as well as peripheral devices can much more easily be dismounted from the tower 14.

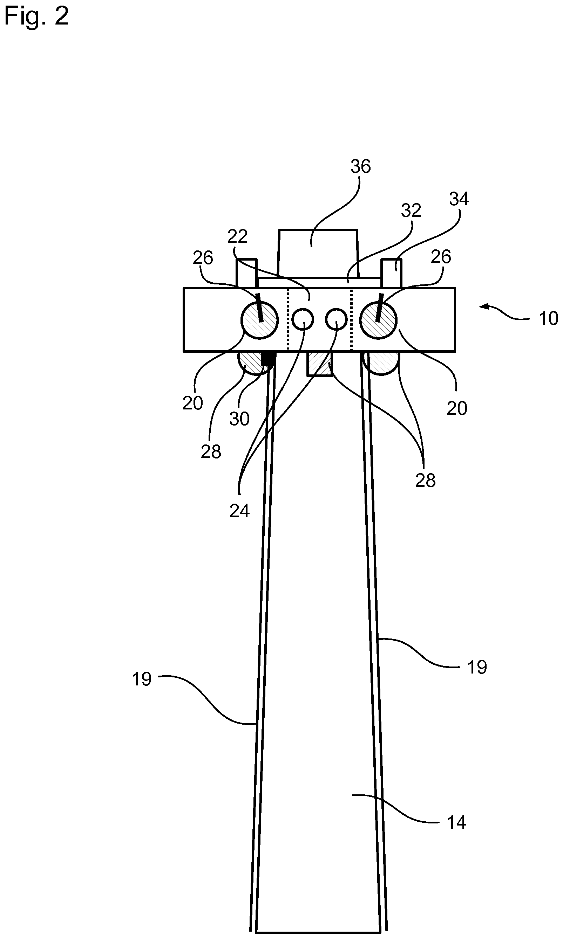

Figure 2 schematically illustrates the tower 14 of the HAWT 12 of Fig. 1 and the device of Fig. 1 when cutting the tower 14. When the hub 16 and rotor blades 18 have been removed from the tower 14, e.g. after the rotor blades 18 have been shredded, it is advantageous, if the tower 14 can be cut down for it to be transported to a recycling site etc.

For cutting the tower 14, the shredding device 10 comprises a cutting unit 32 at its top for stepwise cutting the tower 14 into a plurality of segments 36. The cutting unit 32 preferably comprises a plurality of cutting heads (not illustrated in Fig. 2) which are synchronously rotatable around the vertical axis of the tower 14. The cutting heads can be parts of any appropriate cutting unit, in particular a flame cutting unit or a laser cutting unit. Since the cutting unit 32 is located at the top of the shredding device 10, the shredding device 10 can securely sit on the tower 14, e.g. via the toothed rack 19 and toothed wheels 20, whilst cutting into the tower 14, thereby cutting off a top segment 36.

Since the tower 14 is, in the illustrated embodiment, slightly conically shaped which means that the diameter of the tower 14 increases from its top to its bottom, a pusher unit 34 also at the top of the shredding device 10 can easily push the top segment 36 into the inside of the tower 14. If the tower 14 is not conical, the pusher unit 34 can deform and push the segment 36 into the inside of the tower 14, or push the segment 36 off the top of the tower 14 so that it falls to the ground in the vicinity of the tower 14.

After the hub 16 has been dismounted, the preferred embodiment of the shredding device 10 as illustrated in Fig. 1 and 2 therefore allows also the tower 14 to be cut down into segments from its top towards its base. Hence, the preferred shredding device 10 can shred or crush or cut down the long elements of a HAWT 12 to significantly facilitate dismantling and transporting of a HAWT 12 to be removed or replaced.

### LIST OF REFERENCE NUMERALS

- 10: shredding device
- 12: wind turbine
- 14: tower
- 16: hub
- 18: rotor blade
- 19: toothed rack
- 20: toothed wheel
- 22: crushing chamber
- 24: crushing roll
- 26: rocker arm
- 28: guide wheel
- 30: groove rail
- 32: cutting unit
- 34: pusher unit
- 36: segment

## Claims

1. Device (10) for at least partially shredding a horizontal-axis wind turbine (12),
the wind turbine (12) comprising a vertically oriented tower (14) and a horizontal-axis hub (16) carrying a plurality of rotor blades (18), the hub (16) being mounted in an upper portion of the tower (14),
wherein the device (10) comprises
moving means (20) to vertically move the device (10) along the tower (14), and
a crushing chamber (22) for shredding one of the rotor blades (18), wherein the crushing chamber (22) has a top opening to let the rotor blade (18) dive into the crushing chamber (22) as the device (10) is moved upwards along the tower (14).

2. Device (10) of claim 1,
wherein the crushing chamber (22) contains rotating crushing tools (24) for crushing the rotor blade (18) upon an upward movement of the device (10).

3. Device (10) of claim 1 or 2,
wherein the moving means (20) comprises one wheel, in particular a toothed wheel, more preferably at least two wheels located substantially opposite to each other for contacting the tower (14) on substantially opposite sides, for driving the device (10) to vertically move along the tower (14),
wherein each wheel is preferably arranged on a rocker arm (26) to adapt to different diameters of the tower (14).

4. Device (10) of any of the preceding claims,
further comprising four guide wheels (28) for guiding the device (10) when vertically moving along the tower (14),
wherein the guide wheels (28) are preferably arranged on rocker arms to adapt to different diameters of the tower (14).

5. Device (10) of any of the preceding claims,
wherein the device (10) comprises means (30), in particular at least one of a wheel, a groove, a channel, and a rail as a guide, for securing it against a rotation of the device (10) with respect to the tower (14) about the vertical axis.

6. Device (10) of any of the preceding claims,
wherein the device (10) further comprises a cutting unit (32) at its top for stepwise cutting the tower (14) into a plurality of segments (36) from its top down to its bottom,
preferably wherein the cutting unit (32) is a flame cutting unit or a laser cutting unit.

7. Device (10) of claim 6,
wherein the cutting unit (32) comprises a plurality of cutting heads which are synchronously rotatable around the vertical axis.

8. Device (10) of claim 6 or 7,
wherein the device (10) further comprises a pusher unit (34) for pushing the segments (36) into the inside of the tower (14).

9. Method of at least partially shredding a horizontal-axis wind turbine (12),
the wind turbine (12) comprising a vertically oriented tower (14) and a horizontal-axis hub (16) carrying a plurality of rotor blades (18), the hub (16) being mounted in an upper portion of the tower (14), the method comprising
arranging the hub (16) such that one of the rotor blades (18) extends vertically downwards,
locating a shredding device (10) along the tower (14) so that an end portion the rotor blade (18) dives into a crushing chamber (22) of the shredding device (10) through a top opening of the crushing chamber (22),
moving the shredding device (10) upwards along the tower (14) whilst crushing the portion of the rotor blade (18) which dives into the crushing chamber (22),
optionally, after having crushed the desired portion of the rotor blade (18), moving the shredding device (10) downwards along the tower (14), then arranging the hub (16) such that a further one of the rotor blades (18) extends vertically downwards, and locating the shredding device (10) along the tower (14) so that an end portion of the further one of the rotor blades (18) dives into the crushing chamber (22) through the top opening.

10. Method of claim 9, comprising,
after shredding the rotor blades (18), stepwise cutting the tower (14) into a plurality of segments (36) from its top down to its bottom.

11. Method of claims 9 or 10 using a device (10) of any of claims 1 to 8.
